# FASCICULE DE BREVET EUROPEEN

(11) **EP 2 150 867 B1**
(45) Date de publication et mention de la délivrance du brevet: **16.05.2012**
(21) Numéro de dépôt: 08805590.0
(22) Date de dépôt: 20.05.2008
(51) Int. Cl.: G05D 11/00, F04F 5/16, F04F 5/48

(54) **TROMPE DE MÉLANGE DE GAZ A SECTION D'INJECTION VARIABLE**
GASMISCHPUMPE MIT VARIABLEM INJEKTIONSTEIL
GAS MIXING PUMP WITH VARIABLE INJECTION SECTION

(30) Priorité: 25.05.2007 FR 0703717
(43) Date de publication de la demande: 10.02.2010
(73) Titulaire: Liebherr-Aerospace Toulouse SAS, 31200 Toulouse (FR)
(72) Inventeur: FAUQUE, Stéphane, F-31200 Toulouse (FR); STEPHAN, Christine, F-31590 Verfeil (FR)
(74) Mandataire: Cabinet BARRE LAFORGUE & associés
(86) Numéro de dépôt international: PCT/FR2008/000698
(87) Numéro de publication internationale: WO 2009/000978

(56) Documents cités:
- FR-A- 626 267
- FR-A- 727 483
- US-A1- 2003 205 049

## Description

L'invention concerne une trompe de mélange de gaz -notamment d'air- à section d'injection variable.

Une trompe de mélange d'air est utilisée, par exemple, dans les systèmes de conditionnement d'air d'aéronefs pour fournir un flux d'air à pression constante en sortie de trompe, à partir de deux flux d'air à pressions distinctes. FR 625267 divulgue une trompe de l'art antérieur.

On connaît aussi (cf. par exemple US 2003/0205049) une trompe à section d'injection variable comprenant :
- une enceinte de mélange d'air,
- débouchant dans l'enceinte de mélange, une première conduite d'alimentation de l'enceinte en air, dit air HP, porté à une première pression,
- débouchant dans l'enceinte de mélange, une seconde conduite d'alimentation de l'enceinte en air, dit air IP, porté à une seconde pression, ladite seconde pression étant inférieure à ladite première pression,
- un actionneur pneumatique comprenant un piston mobile agencé dans la première conduite d'alimentation en air HP, le piston mobile étant adapté pour être déplacé entre une position, dite position fermée, dans laquelle il empêche la circulation d'air HP vers l'enceinte de mélange, et une position, dite position ouverte, dans laquelle il autorise la circulation d'air HP vers l'enceinte de mélange.

Une telle trompe permet de modifier la quantité d'air HP fournie à l'enceinte de mélange de manière à pouvoir obtenir, en sortie de trompe, un air mélangé à pression constante, quelle que soit la phase du vol de l'aéronef, c'est-à-dire quelles que soient les valeurs des pressions d'air dans les conduites HP et IP.

De plus, une telle trompe permet de limiter la quantité d'air HP prélevée sur les moteurs principaux de l'aéronef, et donc en particulier d'améliorer les performances et la fiabilité des moteurs principaux, de limiter les consommations de carburant et d'améliorer les performances générales d'un aéronef équipé d'une telle trompe de mélange.

La pression de l'air à la sortie de l'enceinte de mélange dépend des proportions d'air HP et IP fournies à l'enceinte de mélange. Ces proportions dépendent de la position du piston mobile dans la conduite d'alimentation de l'enceinte en air HP. La valeur de la pression en sortie de trompe dépend donc directement de la position du piston mobile dans la conduite d'alimentation en air HP.

Selon US 2003/0205049, la position du piston mobile de l'actionneur à commande pneumatique dans la conduite d'alimentation de l'enceinte en air HP est régulée de manière automatique par la pression de l'air mélangé présent en sortie d'enceinte de mélange. Pour ce faire, US 2003/0205049 prévoit un piston mobile entraîné en déplacement par un actionneur qui comprend un corps d'actionneur adapté pour assurer le guidage du piston mobile. Ce corps d'actionneur comprend également une chambre de fermeture alimentée par de l'air prélevé en sortie d'enceinte de mélange par l'intermédiaire d'une conduite de rétroaction agencée entre la sortie de l'enceinte de mélange et cette chambre de fermeture. L'actionneur comprend également un ressort de fermeture agencé entre le piston mobile et le corps d'actionneur, et un échappement. Dès lors, le piston mobile présente, à chaque instant, une position d'équilibre résultant notamment de la pression de la chambre de fermeture, de la raideur du ressort, des dimensions de l'échappement, etc.

Une telle trompe permet d'obtenir une pression nominale constante en sortie de trompe, indépendamment des valeurs des pressions de l'air circulant dans les conduites d'alimentation de l'enceinte de mélange en air HP et IP.

De plus, une telle trompe permet de limiter automatiquement le recours à l'air HP lorsque la pression nominale est atteinte grâce à un déplacement du piston mobile vers la position fermée, actionné par l'air prélevé à la sortie de la trompe.

Enfin, une telle trompe et en particulier l'actionneur pneumatique permettent d'une part, de résister aux températures de l'air HP prélevé des moteurs qui peuvent atteindre 500 °C, et d'autre part, d'utiliser des ressources énergétiques disponibles qui permettent de limiter le recours à l'air HP prélevé des moteurs lorsque la pression de l'air en sortie de trompe a atteint une valeur nominale.

En revanche, une telle trompe connue ne peut pas être commandée pour fournir une pression en sortie d'enceinte de mélange qui soit différente de la pression nominale. Cette pression dépend de la section des conduites, de la raideur du ressort de l'actionneur, et de manière générale de l'ensemble des caractéristiques de la trompe. En d'autres termes, une trompe selon US 2003/0205049 doit être dimensionnée lors de sa fabrication pour permettre la fourniture, en sortie de trompe, d'un air qui présente, indépendamment de la valeur des pressions HP et IP, une pression nominale déterminée, qui est ensuite non ajustable. Les applications d'une telle trompe sont donc limitées aux applications spécifiques pour lesquelles elle a été dimensionnée.

Par ailleurs, la pression disponible en sortie de trompe dépend étroitement des caractéristiques de la trompe -section des conduites, raideur du ressort, dimension de l'échappement, etc-. Ces caractéristiques sont déterminées en bureau d'études, par exemple, par l'élaboration de maquettes virtuelles. Toute variation entre une caractéristique théorique et la caractéristique réelle correspondante, conduit à une modification de la pression nominale réellement obtenue en sortie de trompe. En d'autres termes, une telle trompe ne présente pas une bonne tolérance vis-à-vis de ses caractéristiques.

L'invention vise à pallier ces inconvénients et à proposer une trompe de mélange de gaz à section d'injection variable avec laquelle il est possible de modifier la valeur de la pression d'air délivrée en sortie de trompe selon une valeur de consigne.

L'invention vise également à proposer une telle trompe qui délivre en sortie de trompe une pression d'air indépendante des valeurs des pressions d'alimentation de la trompe.

L'invention vise également à proposer une trompe de mélange de gaz à section d'injection variable qui présente une bonne tolérance vis-à-vis de ses caractéristiques.

L'invention vise également à proposer une telle trompe qui puisse être installée et adaptée au montage sur tous types d'aéronefs.

L'invention vise également à proposer une telle trompe qui puisse être alimentée par des gaz à très haute température.

L'invention vise également à fournir une trompe à section d'injection variable qui puisse être fabriquée en série et réglée au montage sur tous types d'aéronefs.

L'invention vise également à fournir une trompe à section d'injection variable qui puisse permettre une régulation fine et précise de la pression en sortie de trompe.

Pour ce faire, l'invention concerne une trompe de mélange de gaz -notamment d'air- à section d'injection variable comprenant :
- une enceinte de mélange de gaz,
- débouchant dans ladite enceinte de mélange, une première conduite d'alimentation de ladite enceinte en un gaz, dit gaz HP, porté à une première pression,
- débouchant dans ladite enceinte de mélange, une seconde conduite d'alimentation de ladite enceinte en un gaz, dit gaz IP, porté à une seconde pression distincte de ladite première pression,
- reliée à ladite enceinte, une conduite de sortie des gaz mélangés, dit gaz de sortie, par ladite enceinte de mélange, ledit gaz de sortie présentant une pression intermédiaire entre ladite première pression et ladite seconde pression qui dépend des proportions de gaz HP et IP délivrés à ladite enceinte de mélange,
- un actionneur pneumatique agencé dans ladite première conduite d'alimentation en gaz HP, ledit actionneur comprenant :
   - un piston mobile solidaire d'un obturateur dont la position dans ladite conduite d'alimentation détermine la section de passage de gaz HP vers ladite enceinte de mélange, une variation de position dudit piston entraînant une variation de cette section de passage,
   - une chambre de commande dudit piston mobile alimentée en pression par une conduite de pressurisation, la pression régnant dans la chambre de commande déterminant la position dudit piston mobile,
- un circuit pneumatique, dit circuit de puissance, agencé entre une source de pression, dite première source de pression, et la conduite de pressurisation, le circuit de puissance étant adapté pour délivrer une pression, dite pression de commande, à la chambre de commande par la conduite de pressurisation,
caractérisée en ce que le circuit de puissance comprend au moins une vanne de fuite agencée entre la première source de pression et la conduite de pressurisation, adaptée pour générer une fuite dans le circuit de puissance avec un débit de fuite ajustable dont la valeur détermine la pression délivrée à la chambre de commande de l'actionneur.

Une trompe selon l'invention permet de modifier les proportions HP/IP du mélange de gaz dans l'enceinte de mélange en agissant sur la pression délivrée à la chambre de commande de l'actionneur. Cette pression est délivrée par un circuit de puissance comprenant une vanne de fuite adaptée pour générer une fuite dans le circuit de puissance qui permet d'ajuster la valeur de la pression délivrée à la chambre de commande de l'actionneur pneumatique, et donc la valeur de la pression du mélange de gaz présent en sortie de trompe.

Avantageusement et selon l'invention, ladite vanne de fuite est adaptée pour être déplacée entre au moins une position, dite position ouverte, et au moins une position, dite position fermée, la pression délivrée, par le circuit de puissance, à la chambre de commande dudit actionneur, étant plus faible lorsque ladite vanne de fuite est en position ouverte que lorsque ladite vanne de fuite est en position fermée.

Si la pression en sortie de trompe doit être diminuée, la fuite du circuit de puissance peut être diminuée -en plaçant la vanne de fuite en position fermée- de manière à ce que la pression délivrée à la chambre de commande de l'actionneur pneumatique soit augmentée ce qui va gonfler cette chambre de commande et entraîner un déplacement du piston mobile vers une position dans laquelle la section de passage du gaz HP est réduite par l'obturateur, limitant ainsi la quantité d'air HP délivré à la chambre de mélange. Le nouveau mélange, en sortie de trompe, présente alors une proportion de gaz HP plus faible qu'avant la fermeture de la vanne de fuite, ce qui conduit à une diminution de la pression du mélange. Réciproquement, si la pression en sortie de trompe doit être augmentée, la fuite du circuit pneumatique peut être augmentée -en plaçant la vanne de fuite en position ouverte- de manière à ce que la pression délivrée à la chambre de commande de l'actionneur soit diminuée, ce qui va dégonfler cette chambre de commande et entraîner un déplacement du piston mobile vers une position dans laquelle la section de passage du gaz HP est agrandie, augmentant ainsi la quantité d'air HP délivré à la chambre de mélange. Le nouveau mélange, en sortie de trompe, présente alors une proportion de gaz HP plus élevé qu'avant l'ouverture de la vanne de fuite, ce qui conduit à une augmentation de la pression du mélange.

Avantageusement et selon l'invention, ladite vanne de fuite est adaptée pour être déplacée entre une position fermée, dite position totalement fermée, dans laquelle la pression délivrée à la chambre de commande est la pression de ladite première source de pression, et une position ouverte, dite position totalement ouverte, correspondant à l'ouverture maximale de la vanne de fuite.

Une trompe selon l'invention, équipée d'un circuit pneumatique d'alimentation de la chambre de commande de l'actionneur pneumatique qui comprend au moins une vanne de fuite, permet donc de délivrer en sortie de trompe une pression de consigne paramétrable.

Un circuit pneumatique d'une trompe selon l'invention peut comprendre une ou plusieurs vannes de fuite. Chaque vanne de fuite peut être réalisée par diverses formes et structures. Une vanne de fuite selon l'invention peut être une vanne de fuite tout ou rien ou une vanne proportionnelle.

Néanmoins, avantageusement et selon l'invention, au moins une vanne de fuite est une vanne proportionnelle adaptée pour pouvoir être déplacée continûment entre une position ouverte, dite position d'ouverture maximale et ladite position fermée, de façon à autoriser des variations continues du débit de fuite.

Une trompe selon cette variante de l'invention permet de moduler continûment et précisément le débit de fuite généré par une telle vanne de fuite, ce qui permet d'ajuster continûment et précisément la pression délivrée à la chambre de commande de l'actionneur, et donc de positionner continûment et précisément l'obturateur dans la conduite d'alimentation en gaz HP. Le mélange de gaz obtenu en sortie de trompe peut donc être précisément dosé en gaz HP et gaz IP, ce qui permet d'obtenir une pression déterminée, pouvant prendre toute valeur, ajustable continûment, comprise dans l'intervalle entre une valeur voisine de la pression du gaz HP et la pression du gaz IP.

Le gaz en sortie de trompe peut présenter une pression égale à la pression du gaz IP en obstruant complètement la conduite d'alimentation en gaz HP. En revanche, la conduite en gaz IP ne pouvant pas être obstruée, la pression maximale que peut délivrer une telle trompe en sortie de trompe est inférieure à la valeur de la pression du gaz HP.

L'ouverture et la fermeture d'une vanne de fuite peut être assurée par différents moyens mécaniques, pneumatiques, électriques, etc.

Avantageusement, une trompe selon l'invention comprend un moteur électrique adapté pour permettre des déplacements de ladite vanne de fuite entre ladite position totalement ouverte et ladite position totalement fermée et réciproquement.

Avantageusement, une trompe selon l'invention comprend :
- un capteur de pression agencé en sortie de trompe et adapté pour délivrer un signal, dit signal de mesure de pression, représentatif de la pression dudit gaz de sortie,
- une unité électrique de commande adaptée pour recevoir un signal de consigne représentatif d'une valeur de pression de consigne que doit fournir la trompe en sortie de trompe et le signal de mesure de pression délivré par le capteur de pression, ladite unité électrique de commande étant adaptée pour fournir au moteur électrique, une commande adaptée pour entraîner une ouverture/fermeture de ladite(lesdites) vanne(s) de fuite, de manière à modifier la valeur de la pression délivrée à la chambre de commande de sorte que l'obturateur puisse se déplacer dans la conduite d'alimentation en gaz HP et que la trompe fournisse, en sortie de trompe, un gaz de sortie à ladite pression de consigne.

Une telle trompe comprenant une unité électrique de commande adaptée pour recevoir une pression de consigne et une mesure de la pression en sortie de trompe permet l'évaluation d'une commande moteur à transmettre au moteur électrique de manière à ce que le moteur entraîne un déplacement de chaque vanne de fuite qui permet à la trompe de fournir, en sortie de trompe, un mélange de gaz à la pression de consigne.

Une telle trompe permet donc un réglage de la pression en sortie de trompe. Ce réglage peut être fin et précis par l'utilisation d'un moteur électrique adapté pour entraîner directement ou indirectement chaque vanne de fuite en ouverture et fermeture.

Une trompe selon ce mode de réalisation comprend donc un moteur électrique et une commande électrique permettant d'ajuster la pression délivrée par cette trompe, y compris si elle est soumise à des températures de l'ordre de 500 °C. Cela a été rendu possible en dissociant la commande électrique de la commande pneumatique. En particulier, le circuit de puissance délivre une pression à la chambre de commande de l'actionneur pneumatique. Ce circuit de puissance présente une vanne de fuite à débit ajustable par l'ajustement de la section de la fuite. Cette section de fuite est commandée, directement ou indirectement, par un moteur électrique. Dès lors, le moteur électrique n'est pas soumis directement à l'environnement hostile en terme de pression et de température de la trompe de mélange.

Une trompe selon cette variante est pilotée en pression. Néanmoins, rien n'empêche de prévoir un pilotage en température.

Pour ce faire, avantageusement, une trompe selon l'invention comprend :
- un capteur de température agencé en sortie de trompe et adapté pour délivrer un signal, dit signal de mesure de température, représentatif de la température dudit gaz de sortie,
- une unité électrique de commande adaptée pour recevoir un signal de consigne représentatif d'une valeur de température de consigne que doit fournir la trompe en sortie de trompe et le signal de mesure de la température délivré par le capteur de température, ladite unité électrique de commande étant adaptée pour fournir au moteur électrique, une commande adaptée pour entraîner une ouverture/fermeture de ladite(desdites) vanne(s) de fuite, de manière à modifier la valeur de la pression délivrée à la chambre de commande de sorte que ledit obturateur puisse se déplacer dans ladite première conduite, et que la trompe fournisse, en sortie de trompe, un gaz de sortie à ladite température de consigne.

Selon une autre variante, une trompe peut comprendre à la fois un capteur de pression et un capteur de température et l'unité de commande peut évaluer une commande fonction des mesures de température et de pression.

Avantageusement et selon l'invention, ladite vanne de fuite est une vanne trois voies : une première voie reliée à ladite conduite de pressurisation ; une deuxième voie reliée à ladite première source de pression ; et une troisième voie, reliée à un réservoir de fuite, de pression inférieure à la pression de ladite première source de pression.

Une telle vanne de fuite trois voies permet de moduler la valeur de la pression délivrée à la chambre de commande de l'actionneur entre deux valeurs de pression.

Avantageusement et selon l'invention, ladite vanne de fuite trois voies comprend un clapet adapté pour être déplacé continûment entre une position, correspondant à ladite position totalement fermée, dans laquelle ladite première voie est en communication directe avec ladite deuxième voie, de manière que la pression délivrée à ladite chambre de commande soit la pression de ladite première source de pression, et une position, correspondant à ladite position totalement ouverte, dans laquelle la première voie est en communication directe avec la troisième voie de manière que la pression délivrée à la chambre de commande soit la pression dudit réservoir de fuite.

Avantageusement et selon l'invention, ledit moteur électrique est adapté pour permettre un déplacement dudit clapet de manière à assurer une variation de ladite pression délivrée à ladite chambre de commande dudit actionneur, intermédiaire entre la pression de ladite première source de pression et la pression dudit réservoir de fuite.

Selon cette variante de l'invention, la position de la vanne de fuite est déterminée par la position d'un clapet agencé à l'intérieur de la vanne de fuite. Le déplacement de ce clapet est conditionné par le moteur électrique.

Le moteur électrique peut agir directement sur le clapet ou agir indirectement sur le clapet par l'intermédiaire d'un circuit de commande ou faire partie d'un circuit de commande de la vanne de fuite.

Avantageusement, une trompe selon l'invention comprend un circuit de commande de ladite vanne de fuite, ledit circuit de commande comprenant un régulateur pneumatique comprenant :
- une membrane délimitant deux chambres, une chambre de régulation adaptée pour être alimentée en pression, dite pression de régulation, et une chambre de tarage comprenant un ressort taré relié à ladite membrane, la position d'équilibre de ladite membrane dépendant de ladite pression de régulation et de la raideur dudit ressort taré,
- une tige rigide reliée à la dite membrane et audit clapet de ladite vanne de fuite, de manière qu'un déplacement de ladite membrane entraîne un déplacement dudit clapet.

Le déplacement de la membrane résulte de l'équilibre entre la force délivrée par le ressort taré et la pression exercée par la pression de régulation. L'équilibre de la membrane définit la position du clapet de la vanne de fuite. La position du clapet définit la pression de commande délivrée à la chambre de commande.

Un régulateur d'une trompe selon l'invention peut être un régulateur simple effet ou un régulateur double effet.

Avantageusement et selon l'invention, le circuit de commande de ladite vanne de fuite comprend :
- une source de pression, dite troisième source de pression,
- au moins une conduite agencée entre ladite troisième source de pression et ladite chambre de régulation et adaptée pour délivrer à ladite chambre de régulation, une pression, dite pression de régulation,
- au moins une vanne de fuite adaptée pour engendrer une fuite dans cette conduite qui permet de faire varier ladite pression de régulation délivrée à ladite chambre de régulation.

La vanne de fuite du circuit de commande peut, à l'instar de la vanne de fuite du circuit de puissance d'alimentation de la chambre de commande de l'actionneur, être réalisée par diverses structures.

Avantageusement et selon l'invention, ladite vanne de fuite dudit circuit de commande est formée d'un orifice ménagé dans une conduite et d'une palette mobile agencée en regard de cet orifice, un déplacement de ladite palette assurant une variation de ladite pression de régulation délivrée à ladite chambre de régulation.

Le principe de délivrance d'une pression de régulation à la chambre de régulation du régulateur est identique au principe de délivrance d'une pression de commande à la chambre de commande de l'actionneur. En particulier, ce circuit de commande comprend une vanne de fuite agencée entre une source de pression et la chambre de régulation, cette vanne de fuite du circuit de commande étant adaptée pour générer une fuite dans le circuit de commande, ce qui permet de modifier la valeur de la pression délivrée à la chambre de régulation. Cette vanne de fuite du circuit de commande est de préférence réalisée par un système du type buse/palette.

Avantageusement et selon l'invention, ledit moteur électrique est adapté pour assurer, sur commande de ladite unité de commande, un déplacement de ladite palette qui permet de faire varier la pression délivrée à ladite chambre de régulation dudit régulateur de manière à permettre une ouverture/fermeture de ladite vanne de fuite.

Selon cette variante avantageuse, le moteur électrique entraîne directement la palette en rotation. Cette dernière est de préférence fixée sur l'arbre du moteur électrique.

Le circuit de commande comprend un certain nombre de conduites agencées entre ladite troisième source de pression et la chambre de régulation du régulateur. Ce circuit de commande comprend selon cette variante de l'invention un orifice ménagé sur l'une des conduites, cet orifice étant obstrué au moins en partie par une palette. Le déplacement de la palette permet de faire varier la section de la fuite du circuit de commande, et donc de faire varier la pression de régulation délivrée à ladite chambre de régulation.

Selon cette variante de l'invention, le moteur électrique comprend un arbre sur lequel est agencée la palette. Une rotation de l'arbre du moteur électrique entraîne un pivotement de la palette, ce qui permet d'augmenter ou de diminuer la section de cette fuite et donc de diminuer ou d'augmenter la pression délivrée à la chambre de régulation.

Dès lors, la commande de la vanne de fuite du circuit de puissance est le résultat des étapes suivantes : le moteur électrique modifie la position de la palette du circuit de commande ; cette modification de position entraîne une modification de la valeur de la pression de régulation délivrée à la chambre de régulation ; cette modification de valeur de pression entraîne un déplacement de la membrane du régulateur ; le déplacement de la membrane entraîne un déplacement du clapet de la vanne de fuite du circuit de puissance relié à cette membrane.

L'unité électrique de commande d'une trompe selon l'invention, qui est adaptée pour recevoir une pression de consigne et une mesure de la pression en sortie de trompe, peut en outre évaluer une commande moteur à transmettre au moteur électrique.

Le moteur électrique d'une trompe selon l'invention peut être de tous types.

Néanmoins, avantageusement et selon l'invention, ledit moteur électrique est un moteur couple à courant continu. La commande d'un tel moteur couple est particulièrement aisée. L'unité de commande transmet une consigne en courant audit moteur, ce qui entraîne une rotation de l'arbre moteur, et donc une variation de la section de la fuite.

Dans une trompe selon l'invention comprenant un circuit de puissance adaptée pour délivrer une pression à la chambre de commande de l'actionneur et comprenant une vanne de fuite, et un circuit de commande adaptée pour commander la position de cette vanne de fuite, la puissance et la commande sont dissociées.

Cette dissociation présente un certain nombre d'avantages que ne permettaient pas les trompes de l'art antérieur. En particulier, la dissociation de la commande pneumatique de la puissance pneumatique permet notamment de disposer d'un circuit de commande comprenant un gaz de commande à pression plus faible que la pression du gaz de puissance destiné à alimenter la chambre de l'actionneur. Cette pression plus faible permet d'utiliser un moteur électrique simple qui développe une puissance limitée, ce qui ne serait pas le cas si le moteur électrique était confronté aux pressions du gaz de puissance qui alimente la chambre de l'actionneur. Une telle dissociation permet également de s'affranchir des différences de pression des gaz HP et IP qui circulent dans les conduites de la trompe. En général, une trompe selon l'invention équipe un aéronef et le gaz HP est de l'air prélevé des moteurs de cet aéronef. Dès lors, l'air HP est sensible aux variations du régime moteur.

La troisième source de pression alimentant le circuit de commande peut être de tous types.

Néanmoins, avantageusement et selon l'invention, ladite troisième source de pression dudit circuit de commande est fournie par un détendeur adapté pour fournir une pression prédéterminée, à partir de gaz prélevé en sortie de trompe.

Les sources de pression -une pression haute et une pression basse- qui permettent à la vanne trois voies de délivrer à la chambre de commande de l'actionneur pneumatique, une pression intermédiaire entre la pression haute et la pression basse, peuvent être de tous types.

Avantageusement et selon l'invention, lesdites sources de pression reliées à ladite vanne à trois voies sont l'air ambiant et ledit gaz HP.

Selon cette variante, la source de haute pression est le gaz HP et la source de basse pression est l'air ambiant.

L'actionneur pneumatique d'une trompe selon l'invention peut être de tous types.

De préférence, cet actionneur est un actionneur pneumatique simple effet.

Avantageusement et selon l'invention, ledit actionneur pneumatique comprend :
- un corps d'actionneur portant ledit obturateur à piston mobile, ledit corps d'actionneur comprenant des moyens de guidage du piston mobile,
- délimitée par ledit corps d'actionneur et ledit piston mobile, ladite chambre de commande,
- délimitée par ledit corps d'actionneur et ledit piston mobile, opposée à ladite chambre de commande, une seconde chambre adaptée pour être alimentée par ledit gaz HP,
- un ressort de fermeture agencé dans ladite chambre de commande et adapté pour exercer sur ledit piston mobile, une force qui coopère avec la pression de la chambre de commande pour déplacer le piston mobile.

Le ressort de fermeture permet essentiellement de coopérer avec la pression de commande délivrée à la chambre de commande pour assurer les opérations de déplacement du piston mobile.

Une trompe selon l'invention peut présenter diverses formes et dimensions. De même, les conduites d'alimentation de l'enceinte de mélange en gaz HP et gaz IP peuvent présenter diverses formes et dimensions.

Avantageusement et selon l'invention, lesdites conduites d'alimentation en gaz HP et IP débouchent de manière concentriques dans ladite enceinte de mélange.

Pour ce faire, la conduite d'alimentation de l'enceinte de mélange en gaz HP est logée à l'intérieur de la conduite d'alimentation de l'enceinte en gaz IP. Dès lors, la section de la conduite d'alimentation en gaz IP est annulaire.

Une telle architecture permet de limiter l'encombrement d'une trompe à section d'injection variable et de favoriser le mélange des gaz à l'entrée dans l'enceinte de mélange.

Avantageusement et selon l'invention, ladite conduite d'alimentation de ladite enceinte de mélange est conique et ledit obturateur rigidement lié audit piston mobile de l'actionneur pneumatique est un pointeau conique qui s'étend dans ladite conduite d'alimentation conique.

Une telle coopération de forme permet de faire varier la section d'injection de gaz HP dans l'enceinte de mélange.

Une trompe de mélange selon l'invention est particulièrement destinée à équiper un système de conditionnement d'air d'un aéronef.

Dès lors, avantageusement et selon l'invention, ledit gaz HP est de l'air haute pression prélevé sur les moteurs d'un aéronef et ledit gaz IP est de l'air à la pression interne prélevé de la cabine de l'aéronef.

L'invention concerne en outre une trompe à section d'injection variable caractérisé en combinaison par tout ou partie des caractéristiques mentionnées ci-dessus ou ci-après.

D'autres caractéristiques, buts et avantages de l'invention apparaîtront à la lecture de la description suivante qui présente à titre d'exemple non limitatif un mode de réalisation de l'invention, en référence aux dessins annexés ; sur ces dessins :
- la figure 1 est une vue schématique d'une trompe selon un mode de réalisation de l'invention comprenant un actionneur, une vanne de fuite et un circuit de commande de cette vanne de fuite,
- la figure 2 est une vue schématique d'une trompe selon un autre mode de réalisation de l'invention,
- la figure 3 est une vue schématique d'un actionneur et d'une vanne de fuite d'une trompe selon un mode de réalisation de l'invention dont la vanne de fuite est dans une position ouverte,
- la figure 4 est une vue schématique d'un actionneur et d'une vanne de fuite d'une trompe selon un mode de réalisation de l'invention dont la vanne de fuite est dans une position fermée,
- la figure 5 est une vue schématique d'une trompe selon un autre mode de réalisation de l'invention.

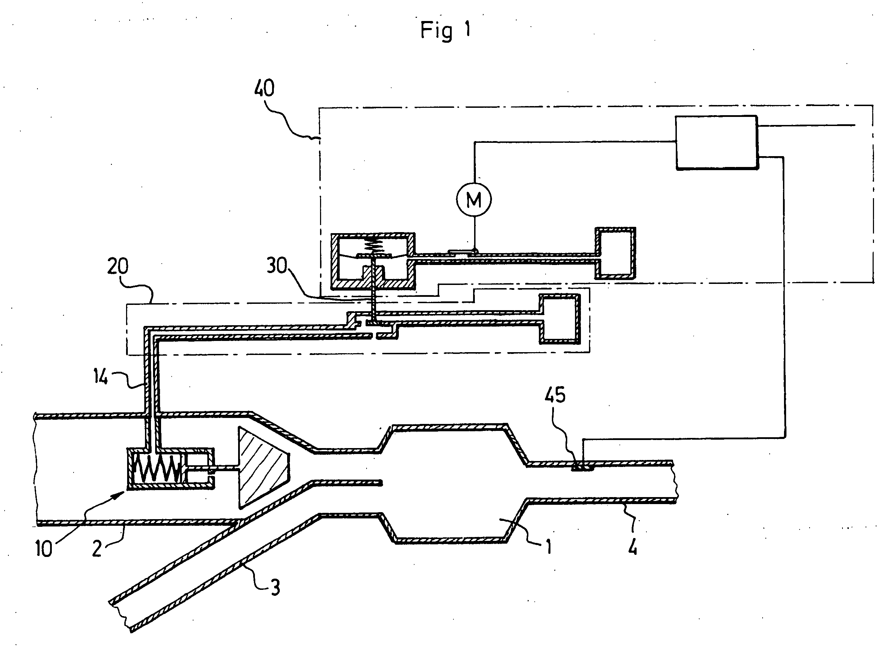

Une trompe selon l'invention comprend, tel que représenté sur la figure 1, une enceinte 1 de mélange de gaz. Cette enceinte 1 de mélange de gaz est alimentée en un gaz haute pression, dit gaz HP, par une conduite 2 qui débouche dans l'enceinte 1, et en un gaz basse pression, dit gaz IP, par une conduite 3 qui débouche dans l'enceinte 1.

L'enceinte 1 de mélange délivre, à une conduite 4 de sortie, un gaz de sortie, résultant du mélange des gaz HP et IP délivrés à l'enceinte 1 de mélange par les conduites 2, 3. Ce gaz de sortie délivré par la conduite 4 de sortie présente une pression intermédiaire entre les pressions IP et HP.

Une trompe selon l'invention comprend en outre un actionneur 10 pneumatique agencé dans la conduite 2. Cet actionneur 10 pneumatique comprend un piston 11 mobile solidaire d'un obturateur 12 dont la position dans la conduite 2 détermine la section de passage de gaz HP vers l'enceinte 1 de mélange. Une variation de position du piston 11 entraîne une variation de cette section de passage. L'actionneur 10 comprend en outre une chambre 13 de commande du piston 11 mobile. Cette chambre 13 de commande est adaptée pour être alimentée en pression par une conduite 14 de pressurisation. La pression régnant dans cette chambre 13 de commande détermine la position du piston 11 mobile, et donc la position de l'obturateur 12 dans la conduite 2. Une variation de position de l'obturateur 12 entraînant une variation de section de passage d'air HP vers l'enceinte, et donc une variation de la pression du gaz de sortie, la pression régnant dans la chambre 13 de commande détermine la pression des gaz de sortie.

Une trompe selon l'invention comprend en outre un circuit pneumatique, dit circuit 20 de puissance, agencé entre une source de pression, dite première source 21 de pression, et ladite conduite 14 de pressurisation. Ce circuit 20 de puissance est adapté pour délivrer une pression, dite pression de commande, à la chambre 13 de commande par le biais de la conduite 14 de pressurisation.

Ce circuit 20 de puissance comprend au moins une vanne 22 de fuite agencée entre la première source 21 de pression et la conduite 14 de pressurisation. Cette vanne 22 de fuite est adaptée pour générer une fuite dans le circuit 20 de puissance qui permet de modifier la pression délivrée à la chambre 13 de commande de l'actionneur 10.

La vanne 22 de fuite du circuit 20 de puissance peut être de tous types connus. Néanmoins, de préférence, la vanne 22 de fuite est une vanne proportionnelle, par exemple une vanne proportionnelle trois voies. Cette vanne 22 proportionnelle trois voies comprend tel que représenté sur les figures, une première voie 23 reliée à la conduite 14 de pressurisation ; une deuxième voie 24 reliée à la première source 21 de pression; et une troisième voie 25 qui fait office de voie de fuite.

Cette troisième voie 25 peut déboucher, tel que représenté sur la figure 1, sur l'atmosphère ambiante qui règne autour de la vanne 22 de fuite.

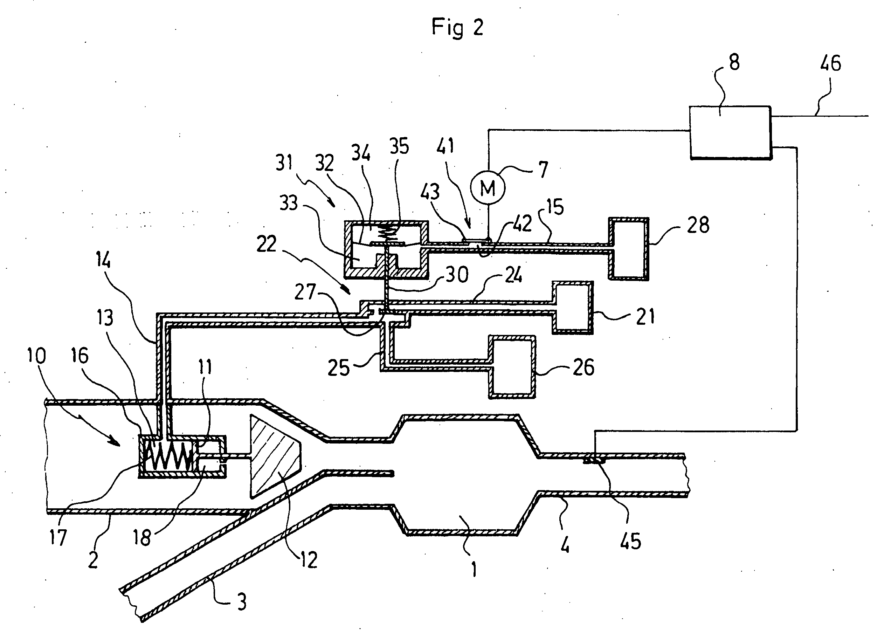

Selon un autre mode de réalisation, tel que représenté sur la figure 2, cette troisième voie 25 peut être reliée à un réservoir 26 de fuite, de pression inférieure à la pression de la première 21 source de pression. Ce réservoir 26 de fuite fait office de deuxième source de pression.

Dès lors, une vanne 22 de fuite d'une trompe selon ce mode de réalisation peut délivrer une pression à la chambre 13 de commande de l'actionneur 10 pneumatique, une pression de commande intermédiaire entre la pression de la première source 21 de pression et la pression du réservoir 26 de fuite.

La commande de la vanne 22 de fuite trois voies est de préférence transmise par l'intermédiaire d'un clapet 27 adapté pour être déplacé continûment entre une position, correspondant à une position totalement fermée de la vanne 22 de fuite, dans laquelle la première voie 23 est en communication directe avec la deuxième voie 24, et une position, correspondant à une position totalement ouverte de la vanne 22 de fuite, dans laquelle la première voie 23 est en communication directe avec la troisième voie 25.

Lorsque la vanne 22 de fuite est la position totalement fermée, la pression délivrée à la chambre 13 de commande est la pression de la première source 21 de pression.

Lorsque la vanne 22 de fuite est dans la position totalement ouverte, la pression délivrée à la chambre 13 de commande est la pression du réservoir 26 de fuite.

Lorsque la vanne 22 de fuite est dans une position intermédiaire entre la position totalement ouverte et la position totalement fermée, la pression délivrée à la chambre 13 de commande est intermédiaire entre la pression de la première source 21 de pression et la pression du réservoir 26 de fuite.

Selon un mode de réalisation particulièrement avantageux de l'invention, le déplacement du clapet 27 de la vanne 22 de fuite est commandé par un circuit 40 de commande de la vanne 22 de fuite.

Ce circuit 40 de commande de la vanne 22 de fuite comprend un régulateur 31 pneumatique. Ce régulateur 31 pneumatique comprend, tel que représenté sur les figures, une membrane 32 délimitant deux chambres, une chambre 33 de régulation adaptée pour être alimentée en pression, dite pression de régulation, et une chambre 34 de tarage comprenant un ressort 35 taré relié à la membrane 32. La position d'équilibre de la membrane 32 dépend de la pression de régulation et de la raideur du ressort 35 taré. Ce ressort 35 peut être de tous types, par exemple un ressort en fil plat enroulé.

Un tel régulateur 31 comprend également une tige 30 rigide solidaire de la membrane 32 et du clapet 27 de la vanne 22 de fuite.

Dès lors, un déplacement de la membrane 32 entraîne un déplacement du clapet 27. Le déplacement du clapet 27 dépend donc de la pression de régulation délivrée à la chambre 33 de régulation.

Pour ce faire, le circuit 40 de commande comprend également une source de pression, dite troisième source 28 de pression, au moins une conduite 15 agencée entre la troisième source 28 de pression et la chambre 33 de régulation, et une vanne 41 de fuite adaptée pour engendrer une fuite dans la conduite 15 du circuit 40 de commande qui permet de faire varier la pression délivrée à la chambre 33 de régulation.

Cette vanne 41 de fuite du circuit 40 de commande est selon un mode avantageux de réalisation, et tel que représenté sur les figures, formée d'un orifice 42 ménagée dans la conduite 15 et d'une palette 43 mobile agencée en regard de cet orifice 42. Un déplacement de la palette 43 assure une variation de la section de la fuite, et donc une variation de la pression de régulation délivrée à la chambre 33 de régulation.

Les déplacements de cette palette 43 sont selon un mode de réalisation avantageux de l'invention assurés par un moteur 7 électrique.

Par exemple, la palette 43 peut être montée sur l'arbre du moteur 7 électrique de telle sorte qu'une mise en route de l'arbre moteur puisse assurer un pivotement de la palette 43 d'au moins quelques degrés de manière à augmenter ou diminuer la section de la fuite du circuit 40 de commande.

Selon un mode de réalisation avantageux de l'invention, la trompe comprend en outre une unité 8 de commande adaptée pour fournir au moteur 7 électrique, une commande adaptée pour entraîner un déplacement de la palette 43. Le déplacement de la palette 43 permet de modifier la pression délivrée à la chambre 33 de régulation du régulateur 31. Cette modification de pression entraîne un déplacement de la membrane 32. Ce déplacement de membrane 32 entraîne un déplacement de la tige 30 rigide. Ce déplacement de la tige 30 entraîne un déplacement du clapet 27. Ce déplacement du clapet 27 permet de modifier la pression délivrée à la chambre 13 de commande. Cette modification de pression entraîne un déplacement de l'obturateur 12 dans la conduite 2. Ce déplacement d'obturateur entraîne une modification des proportions de gaz HP/IP dans l'enceinte 1 de mélange. Cette modification de proportion entraîne une modification de la pression du gaz de sortie présent au niveau de la conduite 4 de sortie.

Le moteur 7 électrique est par exemple un moteur couple adapté pour recevoir une commande en courant continu fournie par l'unité 8 de commande. L'unité de commande est par exemple une unité de commande d'un moteur électrique à courant continu adaptée pour délivrer un courant continu dans une plage de quelques mA à 350 mA.

La commande fournie au moteur 7 électrique par l'unité 8 de commande permet d'effectuer une régulation de pression de la trompe selon ce mode de réalisation de l'invention.

Une trompe selon ce mode de réalisation, et tel que représenté sur les figures, comprend en outre, un capteur 45 de pression agencé en sortie de trompe et adapté pour délivrer à ladite unité 8 de commande un signal, dit signal de mesure de pression, représentatif de la pression du gaz présent en sortie de trompe. Ce capteur 45 peut être de tous types connus.

L'unité 8 de commande est en outre adaptée pour recevoir un signal de consigne véhiculé par une liaison 46. Ce signal de consigne peut être représentatif d'une valeur de pression de consigne que doit fournir la trompe en sortie de trompe. La liaison 46 peut être une liaison filaire, une liaison sans fil et de manière générale tout type de liaison adaptée pour transmettre un signal électrique à une unité de commande.

L'unité 8 de commande peut alors comparer la valeur de la pression fournie par le capteur 45 de pression et la valeur de la pression de consigne et déterminer une commande moteur permettant au moteur 7 électrique d'initier la série d'actions permettant de modifier la pression en sortie de trompe.

Selon un mode de réalisation de l'invention, l'actionneur 10 comprend un corps 16 d'actionneur à l'intérieur duquel est logé le piston 11 solidaire de l'obturateur 12. Le corps 16 d'actionneur comprend en outre des moyens de guidage en translation libre du piston 11 mobile.

L'actionneur comprend en outre la chambre 13 de commande délimitée par le corps 16 d'actionneur et le piston 11 mobile. Cette chambre 13 de commande est équipée d'un ressort 17 adapté pour exercer sur le piston 11 mobile, une force qui coopère avec la pression délivrée à la chambre 13 de commande par la conduite 14 de pressurisation.

L'actionneur comprend également une seconde chambre 18 opposée à la chambre 13 de commande par rapport au piston 11 mobile. Cette seconde chambre 18 est adaptée pour être alimentée en gaz HP.

La position du piston 11 mobile dépend donc de la pression dans la chambre 13 de commande, de la raideur du ressort 17 et de la pression HP de la seconde chambre 18.

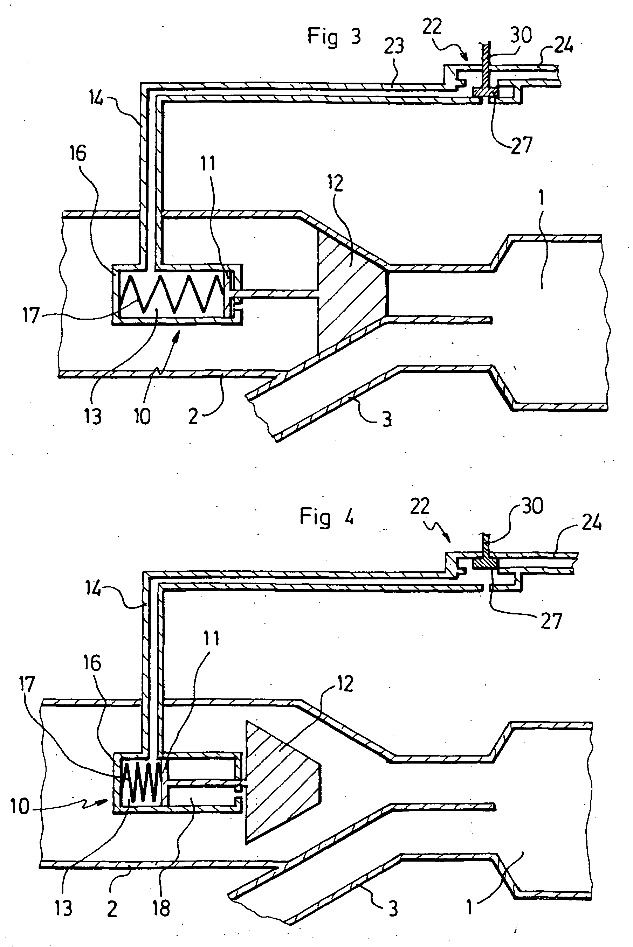

Les figures 3 et 4 présentent deux exemples de relations entre la position du clapet 27 de la vanne 22 de fuite et la position du piston 11 mobile de l'actionneur 10.

Sur la figure 3, le clapet 27 est dans une position dans laquelle la conduite 14 de pressurisation est alimentée directement par la haute pression de la source 21 de pression. La chambre 13 de commande est donc alimentée par cette haute pression. Le piston 11 mobile est donc dans une position complètement déployée. L'obturateur 12 réduit donc au maximum la section de passage de gaz HP vers l'enceinte 1 de mélange, ce qui permet de réduire la pression du gaz en sortie de trompe.

Sur la figure 4, le clapet 27 est dans une position dans laquelle la fuite est maximale. La pression délivrée à la chambre 13 de commande est donc minimale. La différence de pression entre la chambre 13 de commande d'une part et la seconde chambre 18 cumulée au champ de pression dynamique s'appliquant sur l'obturateur 12 d'autre part déplace le piston 11 mobile dans une position totalement rétractée. L'obturateur se déplace donc dans une position dans laquelle la section de passage de gaz HP vers l'enceinte 1 de mélange est maximale. La pression du gaz en sortie de gaz est donc augmentée.

La conduite 2 et l'obturateur 12 peuvent présenter diverses formes.

Selon un mode de réalisation avantageux de l'invention et tel que représenté sur les figures, la conduite 2 d'alimentation de l'enceinte 1 de mélange est conique et l'obturateur 12 est un pointeau conique qui s'étend dans cette conduite 2, de manière qu'un déplacement de l'obturateur modifie de manière continue la section de passage de gaz HP vers l'enceinte 1 de mélange.

Une trompe selon l'invention permet le mélange de divers gaz de pressions différentes.

Une trompe selon l'invention est particulièrement destinée à équiper un circuit de conditionnement d'air d'un aéronef. Dès lors, le gaz HP est de l'air haute pression prélevé sur les moteurs de l'aéronef et le gaz IP est de l'air prélevé de la cabine de l'aéronef.

Rien n'empêche néanmoins de prévoir d'autres sources d'air pour alimenter une trompe selon l'invention.

De même, les première, deuxième et troisième sources de pression peuvent être de tous types.

Selon un mode avantageux de réalisation de l'invention, la première source de pression est la conduite 2 dans laquelle circule le gaz HP, la deuxième source de pression est l'air ambiant au voisinage de la trompe, et la troisième source de pression est dérivée du gaz mélangé en sortie de trompe.

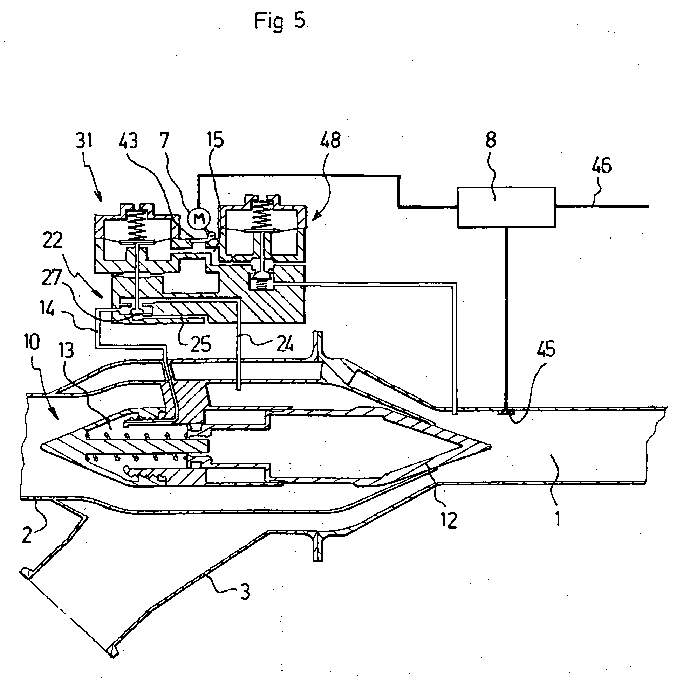

Cette troisième source de pression est de manière avantageuse, et tel que représenté sur la figure 5, obtenue par l'intermédiaire d'un détendeur 48 adapté pour fournir une pression constante à partir du gaz de sortie de trompe. Ce détendeur 48 peut être réalisé par tous les moyens connus pour fournir une pression détendue à partir d'une source de haute ou moyenne pression.

Une trompe selon l'invention peut faire l'objet de nombreuses variantes non décrites.

En particulier, une trompe selon l'invention peut comprendre une pluralité de vannes de fuites et une pluralité de moteur de commande de ces vannes de fuite.

Une trompe selon l'invention permet de réguler précisément la pression en sortie de trompe. En particulier, une trompe selon l'invention permet de fournir une pression constante en sortie de trompe à partir de deux sources de pression non constantes.

Une trompe selon l'invention permet donc de limiter le recours aux prélèvements d'air HP sur les moteurs, ce qui permet notamment de limiter les surconsommations de carburant. De plus, une telle trompe étant destinée à équiper un système de conditionnement d'air, il est possible de sous dimensionner le pré-refroidisseur agencé typiquement entre les moteurs de l'aéronef et un échangeur de chaleur primaire.

Une trompe selon l'invention permet également d'augmenter la puissance des moteurs de l'aéronef, les prélèvements d'air sur ces derniers étant limités par une telle trompe.

Une trompe selon l'invention permet également d'augmenter la durée de vie des moteurs de l'aéronef en raison d'une diminution de la température induite par une diminution des prélèvements d'air que permet une telle trompe.

Une trompe selon l'invention permet également une diminution du poids des accessoires pneumatique en raison d'une plus forte pression disponible lors de la marche à vide des moteurs de l'aéronef.

## Revendications

1. Trompe de mélange de gaz -notamment d'air- à section d'injection variable comprenant :
- une enceinte (1) de mélange de gaz,
- débouchant dans l'enceinte (1) de mélange, une première conduite (2) d'alimentation de l'enceinte (1) de mélange, en un gaz, dit gaz HP, porté à une première pression,
- débouchant dans l'enceinte (1) de mélange, une seconde conduite (3) d'alimentation de l'enceinte (1) de mélange en un gaz, dit gaz IP, porté à une seconde pression distincte de ladite première pression,
- reliée à l'enceinte (1) de mélange, une conduite (4) de sortie des gaz mélangés, dit gaz de sortie, par l'enceinte (1) de mélange, ledit gaz de sortie présentant une pression intermédiaire entre ladite première pression et ladite seconde pression qui dépend des proportions de gaz HP et IP délivrés à l'enceinte (1) de mélange,
- un actionneur (10) pneumatique agencé dans ladite première conduite (2) d'alimentation en gaz HP, l'actionneur (10) pneumatique comprenant :
. un piston (11) mobile solidaire d'un obturateur (12) dont la position dans ladite première conduite (2) d'alimentation détermine une section de passage de gaz HP vers l'enceinte (1) de mélange, une variation de position dudit piston (11) entraînant une variation de cette section de passage,
. une chambre (13) de commande dudit piston (11) mobile alimentée en pression par une conduite (14) de pressurisation, la pression régnant dans la chambre (13) de commande déterminant la position dudit piston (11) mobile,
- un circuit pneumatique, dit circuit (20) de puissance, agencé entre une source de pression, dite première source (21) de pression, et ladite conduite (14) de pressurisation, le circuit (20) de puissance étant adapté pour délivrer une pression, dite pression de commande, à la chambre (13) de commande par ladite conduite (14) de pressurisation,
**caractérisée en ce que** :
- le circuit (20) de puissance comprend au moins une vanne (22) de fuite agencée entre la première source (21) de pression et la conduite (14) de pressurisation, adaptée pour générer une fuite dans le circuit (20) de puissance avec un débit de fuite ajustable dont la valeur détermine la pression délivrée à la chambre (13) de commande de l'actionneur (10) pneumatique,
et **en ce qu'**elle comprend :
- un moteur (7) électrique adapté pour permettre le déplacement de ladite vanne (22) de fuite entre une position, dite position totalement ouverte, correspondant à l'ouverture maximale de la vanne de fuite, et une position, dite position totalement fermée dans laquelle la pression délivrée à la chambre de commande est la pression de ladite première source de pression,
- un capteur (45) de pression agencé en sortie de trompe et adapté pour délivrer un signal, dit signal de mesure de pression, représentatif de la pression dudit gaz de sortie,
- une unité (8) électrique de commande adaptée pour recevoir un signal de consigne représentatif d'une valeur de pression de consigne que doit fournir la trompe en sortie de trompe et le signal de mesure de pression délivré par le capteur (45) de pression, ladite unité (8) électrique de commande étant adaptée pour fournir au moteur (7) électrique, une commande adaptée pour entraîner une ouverture/fermeture de ladite(desdites) vanne(s) (22) de fuite, de manière à modifier la valeur de la pression délivrée à la chambre (13) de commande de sorte que ledit obturateur (12) puisse se déplacer dans ladite première conduite (2), et que la trompe fournisse, en sortie de trompe, un gaz de sortie à ladite pression de consigne.

2. Trompe selon la revendication 1, **caractérisée en ce que** ladite vanne (22) de fuite est une vanne proportionnelle adaptée pour pouvoir être déplacée continûment entre ladite position totalement ouverte, correspondant à l'ouverture maximale de la vanne (22) de fuite, et ladite position totalement fermée,

3. Trompe selon l'une des revendications 1 ou 2, **caractérisée en ce qu'**elle comprend :
- un capteur de température agencé en sortie de trompe et adapté pour délivrer un signal, dit signal de mesure de température, représentatif de la température dudit gaz de sortie,
- une unité (8) électrique de commande adaptée pour recevoir un signal de consigne représentatif d'une valeur de température de consigne que doit fournir la trompe en sortie de trompe et le signal de mesure de la température délivré par le capteur de température, ladite unité (8) électrique de commande étant adaptée pour fournir au moteur (7) électrique, une commande adaptée pour entraîner une ouverture/fermeture de ladite(desdites) vanne(s) (22) de fuite, de manière à modifier la valeur de la pression délivrée à la chambre (13) de commande de sorte que ledit obturateur (12) puisse se déplacer dans ladite première conduite (2), et que la trompe fournisse, en sortie de trompe, un gaz de sortie à ladite température de consigne.

4. Trompe selon l'une des revendications 1 à 3, **caractérisée en ce que** ladite vanne (22) de fuite est une vanne trois voies : une première voie (23) reliée à ladite conduite (14) de pressurisation ; une deuxième voie (24) reliée à ladite première source (21) de pression ; et une troisième voie (25) reliée à un réservoir (26) de fuite, de pression inférieure à la pression de ladite première source (21) de pression.

5. Trompe selon la revendication 4, **caractérisée en ce que** ladite vanne (22) de fuite trois voies comprend un clapet (27) adapté pour être déplacé continûment entre une position, correspondant à ladite position totalement fermée, dans laquelle ladite première voie (23) est en communication directe avec ladite deuxième voie (24), de manière que la pression délivrée à la chambre (13) de commande soit la pression de ladite première source (21) de pression, et une position, correspondant à ladite position totalement ouverte, dans laquelle ladite première voie (23) est en communication directe avec ladite troisième voie (25) de manière que la pression délivrée à la chambre (13) de commande soit la pression dudit réservoir (26) de fuite.

6. Trompe selon la revendication 5, **caractérisée en ce que** ledit moteur (7) électrique est adapté pour permettre le déplacement dudit clapet (27) de manière à assurer une variation de la pression délivrée à la chambre (13) de commande de l'actionneur (10), intermédiaire entre la pression de ladite première source (21) de pression et la pression dudit réservoir (26) de fuite.

7. Trompe selon l'une des revendications 5 ou 6, **caractérisée en ce qu'**elle comprend un circuit (40) de commande de ladite vanne (22) de fuite, ledit circuit (40) de commande comprenant un régulateur (31) pneumatique comprenant :
- une membrane (32) délimitant deux chambres, une chambre (33) de régulation adaptée pour être alimentée en pression, dite pression de régulation, et une chambre (34) de tarage comprenant un ressort (35) taré relié à ladite membrane (32), la position d'équilibre de ladite membrane (32) dépendant de ladite pression de régulation et de la raideur dudit ressort (35) taré,
- une tige (30) rigide relié à la membrane (32) et au clapet (27) de ladite vanne (22) de fuite, de manière qu'un déplacement de la membrane (32) entraîne un déplacement du clapet (27).

8. Trompe selon la revendication 7, **caractérisée en ce que** le circuit (40) de commande comprend :
- une source de pression, dite troisième source (28) de pression,
- au moins une conduite (15) agencée entre ladite troisième source (28) de pression et ladite chambre (33) de régulation, et adaptée pour délivrer à ladite chambre (33) de régulation, une pression de régulation,
- une vanne (41) de fuite adaptée pour engendrer une fuite dans ladite conduite (15) du circuit (40) de commande qui permet de faire varier la pression de régulation délivrée à ladite chambre (33) de régulation.

9. Trompe selon la revendication 8, **caractérisée en ce que** ladite vanne (41) de fuite dudit circuit (40) de commande est formée d'un orifice (42) ménagé dans ladite conduite (15) et d'une palette (43) mobile agencée en regard de cet orifice (42).

10. Trompe selon la revendication 9, **caractérisée en ce que** le moteur (7) électrique est adapté pour assurer, sur commande de l'unité (8) de commande, un déplacement de ladite palette (43) de manière à faire varier la pression délivrée à ladite chambre (33) de régulation du régulateur (31) de manière à permettre une ouverture/fermeture de ladite vanne (22) de fuite dudit circuit (20) de puissance.

11. Trompe selon l'une des revendications 8 à 10, **caractérisée en ce que** ladite troisième source (28) de pression dudit circuit (40) de commande est fournie par un détendeur (48) adapté pour fournir une pression prédéterminée, à partir de gaz prélevé en sortie de trompe.

12. Trompe selon l'une des revendications 8 à 11, **caractérisée en ce que** ladite première (21) source de pression reliée à ladite vanne (22) de fuite trois voie est ledit gaz HP.

13. Trompe selon l'une des revendications 1 à 12, **caractérisée en ce que** ledit actionneur (10) pneumatique comprend :
- un corps (16) d'actionneur à l'intérieur duquel est agencé ledit piston (11) mobile, ledit corps d'actionneur comprenant des moyens de guidage en translation libre dudit piston (11) mobile,
- délimitée par ledit corps d'actionneur et ledit piston mobile, ladite chambre (13) de commande,
- délimitée par ledit corps (16) d'actionneur et ledit piston (11) mobile, opposée à ladite chambre (13) de commande, une seconde chambre (18) adaptée pour être alimentée par ledit gaz HP,
- un ressort (17) de fermeture agencé dans ladite chambre (13) de commande et adapté pour exercer sur ledit piston (11) mobile, une force qui coopère avec ladite pression délivrée à ladite chambre (13) de commande pour assurer les déplacements dudit piston (11) mobile.

14. Trompe selon l'une des revendications 1 à 13, **caractérisée en ce que** les conduites (2, 3) d'alimentation en gaz HP et IP débouchent de manière concentriques dans l'enceinte (1) de mélange.

15. Trompe selon l'une des revendications 1 à 14, **caractérisée en ce que** ledit gaz HP est de l'air haute pression prélevé sur les moteurs d'un aéronef et ledit gaz IP est de l'air à la pression interne prélevé d'une cabine d'aéronef.

16. Trompe selon l'une des revendications 1 à 15, **caractérisée en ce que** ladite première conduite (2) d'alimentation de l'enceinte (1) de mélange est conique et **en ce que** ledit obturateur (12) est un pointeau conique qui s'étend dans ladite première conduite (2) d'alimentation.

17. Trompe selon l'une des revendications 1 à 16, **caractérisée en ce que** ledit moteur (7) électrique est un moteur couple à courant continu.

## Claims

1. Gas - in particular air - mixing pump with variable injection section comprising:
- a gas mixing housing (1),
- opening into the mixing housing (1), a first duct (2) for supplying the mixing housing (1) with a gas, called HP gas, brought to a first pressure,
- opening into the mixing housing (1), a second duct (3) for supplying the mixing housing (1) with a gas, called IP gas, brought to a second pressure which is different from said first pressure,
- connected to the mixing housing (1), an outlet duct (4) for the mixed gases, called outlet gas, via the mixing housing (1), said outlet gas having an intermediate pressure between said first pressure and said second pressure which depends on the proportions of HP gas and IP gas delivered to the mixing housing (1),
- a pneumatic actuator (10) arranged in said first HP gas supply duct (2), the pneumatic actuator (10) comprising:
. a mobile piston (11) integrally attached to a stopper (12) whose position in said first supply duct (2) determines a passage section for HP gas towards the mixing housing (1), a variation in the position of said piston (11) causing a variation in this passage section,
. a control chamber (13) of said mobile piston (11) fed under pressure via a pressurisation duct (14), the pressure prevailing in the control chamber (13) determining the position of said mobile piston (11),
- a pneumatic circuit, called the power circuit (20), arranged between a pressure source, called the first pressure source (21), and said pressurisation duct (14), the power circuit (20) being designed to deliver a pressure, called the control pressure, to the control chamber (13) via said pressurisation duct (14), **characterised in that**:
- the power circuit (20) comprises at least one leak valve (22) arranged between the first pressure source (21) and the pressurisation duct (14), designed to produce a leak in the power circuit (20) with an adjustable leak rate, the value thereof determining the pressure delivered to the control chamber (13) of the pneumatic actuator (10),
and **in that** it comprises:
- an electric motor (7) designed to permit the displacement of said leak valve (22) between a position, called the fully open position, corresponding to the maximum opening of the leak valve, and a position, called the fully closed position, in which the pressure delivered to the control chamber is the pressure of said first pressure source,
- a pressure sensor (45) arranged at the pump outlet and designed to deliver a signal, called the pressure measuring signal, representative of the pressure of said outlet gas,
- an electric control unit (8) designed to receive a reference signal representative of a reference pressure value which the pump has to supply at the pump outlet, and the pressure measuring signal delivered by the pressure sensor (45), said electric control unit (8) being designed to supply the electric motor (7) with a command designed to cause an opening/closing of said leak valve(s) (22), so as to modify the value of the pressure delivered to the control chamber (13) so that said stopper (12) may be displaced in said first duct (2) and so that the pump supplies, at the pump outlet, an outlet gas at said reference pressure.

2. Pump according to Claim 1, **characterised in that** said leak valve (22) is a proportional valve designed to be able to be displaced continuously between said fully open position, corresponding to the maximum opening of the leak valve (22), and said fully closed position.

3. Pump according to one of Claims 1 and 2, **characterised in that** it comprises:
- a temperature sensor arranged at the pump outlet and designed to deliver a signal, called the temperature measuring signal, representative of the temperature of said outlet gas,
- an electric control unit (8) designed to receive a reference signal representative of a reference temperature value which the pump has to deliver at the pump outlet and the temperature measuring signal delivered by the temperature sensor, said electric control unit (8) being designed to supply the electric motor (7) with a command designed to cause an opening/closing of said leak valve(s) (22), so as to modify the value of the pressure delivered to the control chamber (13) so that said stopper (12) may be displaced in said first duct (2) and so that the pump supplies, at the pump outlet, an outlet gas at said reference temperature.

4. Pump according to one of Claims 1 to 3, **characterised in that** said leak valve (22) is a three-way valve: a first port (23) connected to said pressurisation duct (14); a second port (24) connected to said first pressure source (21); a third port (25) connected to a leakage reservoir (26), at a pressure which is lower than the pressure of said first pressure source (21).

5. Pump according to Claim 4, **characterised in that** said three-way leak valve (22) comprises a check valve (27) designed to be displaced continuously between a position, corresponding to said fully closed position, in which said first port (23) is in direct communication with said second port (24), so that the pressure delivered to the control chamber (13) is the pressure of said first pressure source (21), and a position, corresponding to said fully open position, in which said first port (23) is in direct communication with said third port (25) so that the pressure delivered to the control chamber (13) is the pressure of said leakage reservoir (26).

6. Pump according to Claim 5, **characterised in that** said electric motor (7) is designed to permit the displacement of said check valve (27) so as to ensure a variation in the pressure delivered to the control chamber (13) of the actuator (10), which is an intermediate pressure between the pressure of said first pressure source (21) and the pressure of said leakage reservoir (26).

7. Pump according to one of Claims 5 and 6, **characterised in that** it comprises a control circuit (40) of said leak valve (22), said control circuit (40) comprising a pneumatic regulator (31) comprising:
- a membrane (32) delimiting two chambers, a regulating chamber (33) designed to be supplied with pressure, called the regulating pressure, and a calibrating chamber (34) comprising a calibrated spring (35) connected to said membrane (32), the position of equilibrium of said membrane (32) depending on said regulating pressure and the stiffness of said calibrated spring (35),
- a rigid rod (30) connected to the membrane (32) and to the check valve (27) of said leak valve (22), so that a displacement of the membrane (32) causes a displacement of the check valve (27).

8. Pump according to Claim 7, **characterised in that** the control circuit (40) comprises:
- a pressure source, called the third pressure source (28),
- at least one duct (15) arranged between said third pressure source (28) and said regulating chamber (33) and designed to deliver to said regulating chamber (33) a regulating pressure,
- a leak valve (41) designed to produce a leak in said duct (15) of the control circuit (40) which makes it possible to vary the regulating pressure delivered to said regulating chamber (33).

9. Pump according to Claim 8, **characterised in that** said leak valve (41) of said control circuit (40) is formed by an orifice (42) made in said duct (15) and by a mobile vane (43) arranged opposite this orifice (42).

10. Pump according to Claim 9, **characterised in that** the electric motor (7) is designed to ensure, upon a command of the control unit (8), a displacement of said vane (43) so as to vary the pressure delivered to said regulating chamber (33) of the regulator (31) so as to permit an opening/closing of said leak valve (22) of said power circuit (20).

11. Pump according to one of Claims 8 to 10, **characterised in that** said third pressure source (28) of said control circuit (40) is supplied by a pressure reducing valve (48) designed to supply a predetermined pressure, from gas drawn from the pump outlet.

12. Pump according to one of Claims 8 to 11, **characterised in that** said first pressure source (21) connected to said three-way leak valve (22) is said HP gas.

13. Pump according to one of Claims 1 to 12, **characterised in that** said pneumatic actuator (10) comprises:
- an actuator body (16) inside which is arranged said mobile piston (11), said actuator body comprising means for guiding said mobile piston (11) in free translation,
- delimited by said actuator body and said mobile piston, said control chamber (13),
- delimited by said actuator body (16) and said mobile piston (11), opposite said control chamber (13), a second chamber (18) designed to be supplied with said HP gas,
- a closing spring (17) arranged in said control chamber (13) and designed to exert on said mobile piston (11) a force which cooperates with said pressure delivered to said control chamber (13) to ensure the displacements of said mobile piston (11).

14. Pump according to one of Claims 1 to 13, **characterised in that** the ducts (2, 3) for supplying HP gas and IP gas open concentrically into the mixing housing (1).

15. Pump according to one of Claims 1 to 14, **characterised in that** said HP gas is high pressure air drawn from the engines of an aircraft and said IP gas is air at internal pressure drawn from an aircraft cabin.

16. Pump according to one of Claims 1 to 15, **characterised in that** said first duct (2) for supplying the mixing housing (1) is conical and **in that** said stopper (12) is a conical needle valve which extends into said first supply duct (2).

17. Pump according to one of Claims 1 to 16, **characterised in that** said electric motor (7) is a direct-current torque motor.

## Patentansprüche

1. Gasgemisch-Strahlpumpe - besonders mit Luft - mit variablem Einspritzabschnitt, umfassend:
- eine Einfassung (1) des Gasgemischs,
- eine in die Einfassung (1) des Gasgemischs einmündende erste Versorgungsleitung (2) der Einfassung (1) des Gemischs mit einem Gas, bezeichnet als HP-Gas, das mit einem ersten Druck beaufschlagt wird,
- eine in die Einfassung (1) des Gasgemischs einmündende zweite Versorgungsleitung (3) der Einfassung (1) des Gemischs mit einem Gas, bezeichnet als IP-Gas, das mit einem zweiten, von dem genannten ersten Druck unterschiedlichen Druck beaufschlagt wird,
- eine durch die Einfassung (1) des Gemischs an die Einfassung (1) des Gemischs angeschlossene Ausgangsleitung (4) der gemischten Gase, bezeichnet als Ausgangsgas, wobei das genannte Ausgangsgas einen Zwischendruck zwischen dem genannten ersten Druck und dem genannten zweiten Druck aufweist, der von den Anteilen des HP- und IP-Gases abhängt, die in die Einfassung (1) des Gemischs ausgegeben werden,
- ein pneumatisches Betätigungsorgan (10), das in der genannten ersten Versorgungsleitung (2) mit HP-Gas angeordnet ist, wobei das pneumatische Betätigungsorgan (10) umfasst:
* einen mobilen Kolben (11), der mit einer Verschlussvorrichtung (12) fest verbunden ist, deren Position in der genannte ersten Versorgungsleitung (2) einen HP-Gasdurchgangsabschnitt zur Einfassung (1) des Gemischs bestimmt, wobei eine Positionsänderung des genannten Kolbens (11) eine Änderung dieses Durchgangsabschnitts nach sich zieht,
* eine Steuerkammer (13) des genannten mobilen Kolbens (11), der durch eine Druckbeaufschlagungsleitung (14) mit Druck beaufschlagt wird, wobei der in der Steuerkammer (13) herrschende Druck die Position des mobilen Kolbens (11) bestimmt,
- ein Druckluftstellsystem, bezeichnet als Leistungskreis (20), der zwischen einer Druckquelle, bezeichnet als erste Druckquelle (21), und der genannten Druckbeaufschlagungsleitung (14) angeordnet ist, wobei der Leistungskreis (20) angepasst ist, um einen Druck, bezeichnet als Steuerdruck, durch die genannte Druckbeaufschlagungsleitung (14) an die Steuerkammer (13) zu liefern,
**dadurch gekennzeichnet, dass**:
- der Leistungskreis (20) wenigstens ein Leckageventil (22) umfasst, das zwischen der ersten Druckquelle (21) und der Druckbeaufschlagungsleitung (14) angeordnet ist, die angepasst ist, um eine Leckage im Leistungskreis (20) mit einem einstellbaren Leckagedurchsatz zu generieren, dessen Wert den an die Steuerkammer (13) des pneumatischen Betätigungsorgans (10) abgegebenen Druck bestimmt,
und dass sie umfasst:
- einen Elektromotor (7), der angepasst ist, um die Verschiebung des genannten Leckageventils (22) zwischen einer Position, bezeichnet als komplett offene Position, die der maximalen Öffnung des Leckageventils entspricht, und einer Position, bezeichnet als komplett geschlossene Position, in der der an die Steuerkammer abgegebene Druck der Druck der genannten ersten Druckquelle ist, zu erlauben,
- einen Drucksensor (45), der am Pumpenausgang angeordnet und angepasst ist, um ein Signal, bezeichnet als Druckmesssignal, das den Druck des genannten Gasausgangs darstellt, auszugeben,
- eine elektrische Steuereinheit (8), die angepasst ist, um ein Sollsignal zu empfangen, das einen Solldruckwert darstellt, den die Pumpe am Pumpenausgang liefern soll, und das Druckmesssignal, das vom Drucksensor (45) ausgegeben wird, wobei die genannte elektrische Steuereinheit (8) angepasst ist, um dem Elektromotor (7) einen Befehl zu liefern, der angepasst ist, um ein Öffnen / Schließen des (der) genannten Leckageventils (Leckageventile) (22) derart nach sich zu ziehen, dass der Wert des an die Steuerkammer (13) ausgegebenen Drucks derart abgeändert wird, dass die genannte Verschlussvorrichtung (12) sich in der genannten ersten Leitung (2) verschieben kann und dass die Strahlpumpe am Strahlpumpenausgang ein Ausgangsgas mit dem genannten Solldruck liefert.

2. Strahlpumpe gemäß Anspruch 1, **dadurch gekennzeichnet, dass** das genannte Leckageventil (22) ein proportionales Ventil ist, das angepasst ist, um kontinuierlich zwischen der genannten komplett offenen Position, die der maximalen Öffnung des Leckageventils (22) entspricht, und der genannten komplett geschlossenen Position verschoben zu werden.

3. Strahlpumpe gemäß Anspruch 1 oder 2, **dadurch gekennzeichnet, dass** sie umfasst:
- einen Temperatursensor, der am Strahlpumpenausgang angeordnet und angepasst ist, um ein Signal, bezeichnet als Temperaturmesssignal, das die Temperatur des genannten Ausgangsgases darstellt, auszugeben,
- eine elektrische Steuereinheit (8), die angepasst ist, um ein Sollwertsignal zu empfangen, das einen Solltemperaturwert darstellt, das die Strahlpumpe am Strahlpumpenausgang liefern soll, und das Messsignal der Temperatur, das vom Temperatursensor ausgegeben wird, wobei die genannte elektrische Steuereinheit (8) angepasst ist, um dem Elektromotor (7) einen Befehl zu liefern, der angepasst ist, um ein Öffnen / Schließen des (der) genannten Leckageventils (Leckageventile) (22) derart nach sich zu ziehen, dass der Wert des der Steuerkammer (13) ausgegebenen Drucks derart abgeändert wird, dass die genannte Verschlussvorrichtung (12) sich in der genannten ersten Leitung (2) verschieben kann und dass die Strahlpumpe am Strahlpumpenausgang ein Ausgangsgas in der genannten Solltemperatur liefert.

4. Strahlpumpe gemäß Anspruch 1 bis 3, **dadurch gekennzeichnet, dass** das genannte Leckageventil (22) ein Dreiwegeventil ist: ein erster Weg (23), der an die genannte Druckbeaufschlagungsleitung (14) angeschlossen ist; ein zweiter Weg (24), der an die genannte erste Druckquelle (21) angeschlossen ist; und ein dritter Weg (25), der an einen Leckagetank (26) mit einem niedrigeren Druck als dem Druck der genannten ersten Druckquelle (21) angeschlossen ist.

5. Strahlpumpe gemäß Anspruch 4, **dadurch gekennzeichnet, dass** das genannte Dreiwege-Leckageventil (22) eine Klappe (27) umfasst, die angepasst ist, kontinuierlich zwischen einer Position, die der genannten komplett geschlossenen Position entspricht, in der der genannte erste Weg (23) sich in direkter Kommunikation mit dem zweiten Weg (24) derart befindet, dass der an die Steuerkammer (13) ausgegebene Druck der Druck der genannten ersten Druckquelle (21) ist, und einer Position, die der genannten komplett geöffneten Position entspricht, in der der genannte erste Weg (23) sich in direkter Kommunikation mit dem genannten dritten Weg (25) derart befindet, dass der an die Steuerkammer (13) ausgegebene Druck der Druck des genannten Leckagetanks (26) ist, verschoben zu werden.

6. Strahlpumpe gemäß Anspruch 5, **dadurch gekennzeichnet, dass** der genannte Elektromotor (7) angepasst ist, um die Verschiebung der genannten Klappe (27) derart zu erlauben, dass eine Variation des Drucks gewährleistet ist, der an die Steuerkammer (13) des Betätigungsorgans (10) ausgegeben wird, der zwischen dem Druck der genannten ersten Druckquelle (21) und dem Druck des genannten Leckagetanks (26) liegt.

7. Strahlpumpe gemäß Anspruch 5 oder 6, **dadurch gekennzeichnet, dass** sie einen Steuerschaltkreis (40) des genannten Leckageventils (22) umfasst, wobei der genannte Steuerschaltkreis (40) einen pneumatischen Regler (31) umfasst, umfassend:
- eine zwei Kammern begrenzende Membran (32), eine Regulierungskammer (33), die angepasst ist, um mit Druck beaufschlagt zu werden, bezeichnet als Regulierungsdruck, und eine Ausgleichskammer (34), die eine geeichte Feder (35) umfasst, die mit der genannten Membran (32) verbunden ist, wobei die Ausgleichsposition der genannten Membran (32) von dem genannten Regulierungsdruck und der Steifheit der genannten geeichten Feder (35) abhängt,
- einen steifen Stift (30), der an die Membran (32) und an die Klappe (27) des genannten Leckageventils (22) derart angeschlossen ist, dass eine Verschiebung der Membran (32) eine Verschiebung der Klappe (27) nach sich zieht.

8. Strahlpumpe gemäß Anspruch 7, **dadurch gekennzeichnet, dass** der Steuerschaltkreis (40) umfasst:
- eine Druckquelle, bezeichnet als dritte Druckquelle (28),
- wenigstens eine Leitung (15), die zwischen der genannten dritten Druckquelle (28) und der genannten Regulierungskammer (33) angeordnet und angepasst ist, um der genannten Regulierungskammer (33) einen Regulierungsdruck zu liefern,
- ein Leckageventil (41), das angepasst ist, um ein Leck in der genannten Leitung (15) des Steuerschaltkreises (40) hervorzurufen, das die Änderung des Regulierungsdruck erlaubt, der an die genannte Regulierungskammer (33) ausgegeben wird.

9. Strahlpumpe gemäß Anspruch 8, **dadurch gekennzeichnet, dass** das genannte Leckageventil (41) des genannten Steuerkreislaufs (40) aus einer Öffnung (42) gebildet wird, die in der genannten Leitung (15) ausgespart ist, und aus einem mobilen Schieber (43), der gegenüber dieser Öffnung (42) angeordnet ist.

10. Strahlpumpe gemäß Anspruch 9, **dadurch gekennzeichnet, dass** der Elektromotor (7) angepasst ist, um auf Befehl der Steuereinheit (8) eine Verschiebung des genannten Schiebers (43) derart zu steuern, dass der Druck variiert wird, der an die genannte Regulierungskammer (33) des Reglers (31) derart ausgegeben wird, dass ein Öffnen / Schließen des genannten Leckageventils (22) des genannten Leistungsschaltkreises (20) erlaubt wird.

11. Strahlpumpe gemäß Anspruch 8 bis 10, **dadurch gekennzeichnet, dass** die genannte dritte Druckquelle (28) des genannten Steuerschaltkreises (40) durch einen Druckminderer (48) geliefert wird, der angepasst ist, um einen vorbestimmten Druck ausgehend von am Strahlpumpenausgang entnommenem Gas zu liefern.

12. Strahlpumpe gemäß Anspruch 8 bis 11, **dadurch gekennzeichnet, dass** die genannte erste Druckquelle (21), die an das genannte Dreiwege-Leckageventil (22) angeschlossen ist, das genannte HP-Gas ist.

13. Strahlpumpe gemäß Anspruch 1 bis 12, **dadurch gekennzeichnet, dass** das genannte pneumatische Betätigungsorgan (10) umfasst:
- einen Betätigungskörper (16), in dessen Innern der genannte mobile Kolben (11) angeordnet ist, wobei der genannte Betätigungskörper Führungsmittel in freier Translation des genannten mobilen Kolbens (11) umfasst,
- die genannte Steuerkammer (13), die durch den genannten Betätigungskörper und den genannten mobilen Kolben begrenzt wird,
- gegenüber der genannten Steuerkammer (13) eine zweite Kammer (18), die von dem genannten Betätigungskörper und dem genannten mobilen Kolben (11) begrenzt wird und angepasst ist, um mit dem genannten HP-Gas beaufschlagt zu werden,
- eine Verschlussfeder (17), die in der genannten Steuerkammer (13) angeordnet und angepasst ist, um auf den genannten mobilen Kolben (11) eine Kraft auszuüben, die mit dem genannten Druck zusammenwirkt, der an die genannte Steuerkammer (13) abgegeben wird, um die Verschiebungen des genannten mobilen Kolbens (11) zu gewährleisten.

14. Strahlpumpe gemäß Anspruch 1 bis 13, **dadurch gekennzeichnet, dass** die Versorgungsleitungen (2, 3) mit HP- und IP-Gas konzentrisch in die Einfassung (1) des Gemischs einmünden.

15. Strahlpumpe gemäß Anspruch 1 bis 14, **dadurch gekennzeichnet, dass** das genannte HP-Gas Hochdruckluft ist, die auf den Motoren eines Luftfahrzeugs entnommen wird und das genannte IP-Gas Luft unter internem Druck ist, die aus einer Luftfahrzeugkabine entnommen wird.

16. Strahlpumpe gemäß Anspruch 1 bis 15, **dadurch gekennzeichnet, dass** die genannte erste Versorgungsleitung (2) der Einfassung (1) des Gemischs konisch ist und dass die genannte Verschlussvorrichtung (12) ein konischer Bolzen ist, der sich in der genannten ersten Beaufschlagungsleitung (2) erstreckt.

17. Strahlpumpe gemäß Anspruch 1 bis 16, **dadurch gekennzeichnet, dass** der genannte Elektromotor (7) ein Drehmotor für Gleichstrom ist.
